# EUROPÄISCHE PATENTSCHRIFT

(11) **EP 2 504 680 B1**
(45) Veröffentlichungstag und Bekanntmachung des Hinweises auf die Patenterteilung: **11.12.2013**
(21) Anmeldenummer: 10776972.1
(22) Anmeldetag: 28.10.2010
(51) Int. Cl.: G01M 3/04, G01M 3/20

(54) **VERFAHREN ZUR DICHTHEITSPRÜFUNG VON WASSERFÜHRENDEN KOMPONENTEN IN EINEM GEHÄUSE**
METHOD FOR TESTING THE TIGHTNESS OF WATER CONDUCTING COMPONENTS IN A HOUSING
PROCÉDÉ POUR TESTER L'ÉTANCHÉITÉ DE COMPOSANTS VÉHICULANT DE L'EAU DANS UN BOÎTIER

(30) Priorität: 27.11.2009 DE 102009056172; 23.01.2010 DE 102010005494
(43) Veröffentlichungstag der Anmeldung: 03.10.2012
(73) Patentinhaber: Inficon GmbH, 50968 Köln (DE)
(72) Erfinder: GROSSE BLEY, Werner, 53125 Bonn (DE); KÜSTER, Gerhard, 51109 Köln (DE); BERGMANN, Joachim, 33611 Bielefeld (DE); WOLDT, Erik, 59556 Lippstadt (DE)
(74) Vertreter: von Kreisler Selting Werner
(86) Internationale Anmeldenummer: PCT/EP2010/066403
(87) Internationale Veröffentlichungsnummer: WO 2011/064067

(56) Entgegenhaltungen:
- DE-U1- 8 214 409
- US-A- 6 063 632

## Beschreibung

Die Erfindung betrifft ein Verfahren zur Dichtheitsprüfung von wasserführenden Komponenten in einem Gehäuse.

Bei der Qualitätsprüfung von Massenprodukten ist es häufig erforderlich, eine Dichtheitsprüfung vorzunehmen. So müssen Waschmaschinen und Geschirrspülmaschinen getestet werden, um etwaige Lecks an Schlauchleitungen und Rohrleitungen zu erkennen.

In DE 10 2007 032 250 B3 ist eine Vorrichtung zum Detektieren von Flüssigkeitslecks beschrieben, die ein großflächiges, elektrisch nicht leitendes Flächenelement aufweist, auf dem sich Leiterbahnen befinden. An den Leiterbahnen liegt eine elektrische Spannung an. Durch Messen des elektrischen Widerstandes wird detektiert, wenn sich ein Flüssigkeitstropfen auf dem Flächenelement befindet.

Der Erfindung liegt die Aufgabe zugrunde, ein Verfahren zur Dichtheitsprüfung anzugeben, das für die Dichtheitsprüfung von Komponenten in einem umschließenden Gehäuse geeignet ist, welches eine Atmosphäre enthält.

Eine erste Variante der Erfindung sieht vor, dass die wasserführenden Komponenten mit einer Kombination aus Wasser und einem Indikator gefüllt werden, wobei im Falle des Austretens von Tropfen der darin enthaltene Indikator in die von dem Gehäuse umschlossene Atmosphäre entweicht und durch einen auf den Indikator ansprechenden Sensor erkannt wird.

Der Indikator kann eine mit dem Wasser vermischte Flüssigkeit sein oder ein Gas, das in dem Wasser gelöst ist. Als Indikator eignen sich in besonderer Weise Alkohole, wie Ethanol, und andere Flüssigkeiten, die schnell in die Atmosphäre hinein verdampfen. Da ein auf den Boden auftreffender Wassertropfen eine große Oberfläche hat, verdampft in kurzer Zeit eine große Menge des Indikators in die im Gehäuse befindliche Atmosphäre. Ein entsprechender Sensor, nämlich ein Gas- oder Dampfsensor, der für den Indikator selektiv empfindlich ist, erkennt das Auftreten des Indikators in der Atmosphäre und signalisiert "Undichtheit". Ein solcher Sensor enthält eine Pumpe, mit der die Gehäuseatmosphäre angesaugt wird. Die Gehäuseatmosphäre wird einem Sensor zugeführt, der Aufschluss über das Vorhandensein des Indikators liefert. Der Sensor kann ein Gas-Sensor auf der Basis der Messung der Infrarotabsorption sein, ein Massenspektrometer oder dergleichen. Ein Vorteil der Erfindung besteht darin, dass die Dichtheitsprüfung keinen Druckaufbau in den zu prüfenden Komponenten erfordert. Die Messung kann vielmehr drucklos durchgeführt werden. Es ist auch möglich, dass der Indikator ein im Wasser in gelöster Form enthaltenes Gas ist, wie beispielsweise CO₂ oder Helium.

Eine zweite Variante des erfindungsgemäßen Verfahrens sieht vor, dass ein Indikator in ein Behältnis eingegeben wird, das mindestens eine bei Kontakt mit Wasser durchlässig werdende Wand aufweist, dass das Behältnis in dem Gehäuse unterhalb der zu prüfenden Komponenten positioniert wird und dass das Austreten des Indikators aus dem Behältnis durch einen auf den Indikator ansprechenden Sensor erkannt wird. Hierbei wird der Effekt ausgenutzt, dass die Wand des Behältnisses beim Auftreffen eines Wassertropfens für den Indikator durchlässig wird, so dass der Indikator aus dem Behälterinnern in die umgebende Atmosphäre des Gehäuses entweicht. Der Indikator ist vorzugsweise gasförmig oder dampfförmig. Als Indikatorgase eignen sich besonders Edelgase, insbesondere Helium, aber auch CO₂.

Eine spezielle Ausführungsform der zweiten Variante sieht vor, dass das Behältnis aus Mikrokapseln entsteht, die mit einem Indikator gefüllt sind, der beispielsweise aus Alkohol besteht. Im Falle einer Undichtigkeit gelangt Wasser in Kontakt mit den Mikrokapseln, die dadurch zerstört werden. Der in den Mikrokapseln enthaltene Alkohol wird freigesetzt. Durch einen entsprechenden Sensor wird die Anwesenheit von Alkohol in der Luft erkannt und angezeigt. Die zum Auslösen der Sensorerkennung benötigte Wassermenge ist sehr gering. Sie liegt in der Größenordnung von 0,1 ml. Unter "Mikrokapsel" wird ein Gebilde verstanden, das einen Kern aufweist, der vollständig von einer - gegebenenfalls semipermeablen - dünnen Wand umgeben ist. Die Größe der Mikrokapseln beträgt im Allgemeinen 1-1500 µm (Mikrometer), vorzugsweise 10 µm - 300 µm, nochmals bevorzugt 30 µm - 150 µm, kann aber in Einzelfällen auch mehr, z. B. bis 2000, 3000, 4000, 5000 µm, betragen.

Die Mikrokapseln können zusammen mit anderen Substanzen, wie Füllstoffen, unverkapselten Geruchs-, oder biologischen Wirkstoffen, gegebenenfalls mit anorganischen oder organischen oder auch biologischen Trägern assoziiert oder auch zusammen mit biologischen Materialien vorliegen. Diese können alle mit Wasser, einer wässrigen Lösung oder einer geeigneten organischen Flüssigkeit oder mit deren Mischungen befeuchtet sein.

In einer bevorzugten Ausführung besitzen Mikrokapseln semipermeable Wände. Durch diese kann der Wirkstoff aus der Kapsel heraus in das Wasser diffundieren. Hierbei kann das Wasser von außen durch die Kapselwand dringen, den Inhaltsstoff im Kern lösen und dann zusammen mit dem gelösten Inhaltsstoff aus der Kapsel heraus diffundieren.

Eine dritte Variante des erfindungsgemäßen Verfahrens sieht vor, dass ein Generatorstoff, der bei Kontakt mit Wasser einen gasförmigen oder dampfförmigen Indikator erzeugt, in dem Gehäuse unterhalb der zu prüfenden Komponenten positioniert wird und dass das Auftreten des Indikators durch einen auf den Indikator ansprechenden Sensor erkannt wird. Der Generatorstoff kann in einem wasserlöslichen Behältnis deponiert werden, wodurch er bei Lagerung gegen Luftfeuchte geschützt ist. Erst beim Auftreffen eines Wassertropfens, wodurch die Wand des Behältnisses durchlässig wird, gelangt Wasser an den Generatorstoff und z. B. CO₂ wird freigesetzt und kann dann innerhalb des Gehäuses detektiert werden. Als Generatorstoff eignet sich eine Mischung aus Natron und Säure, die bei Kontakt mit Wasser CO₂ als Indikator erzeugt. CO₂ ist mit Hilfe eines Infrarotsensors gut nachweisbar.

Im Folgenden werden Ausführungsbeispiele der Erfindung unter Bezugnahme auf die Zeichnungen näher erläutert.

Es zeigen:
- Fig. 1: die Darstellung eines Gehäuses einer Waschmaschine während der Dichtheitsprüfung nach der ersten Variante der Erfindung,
- Fig. 2: eine Seitenansicht eines Behältnisses für die Durchführung der zweiten Variante des erfindungsgemäßen Verfahrens,
- Fig. 3: eine Draufsicht des Behältnisses nach Figur 2, wobei zwei alternative Arten der Verschweißung der Folienlagen dargestellt sind und
- Fig. 4: ein Material aus einem Substrat der mit einem Generatorstoff beschichtet ist, zur Durchführung der dritten Variante des erfindungsgemäßen Verfahrens.

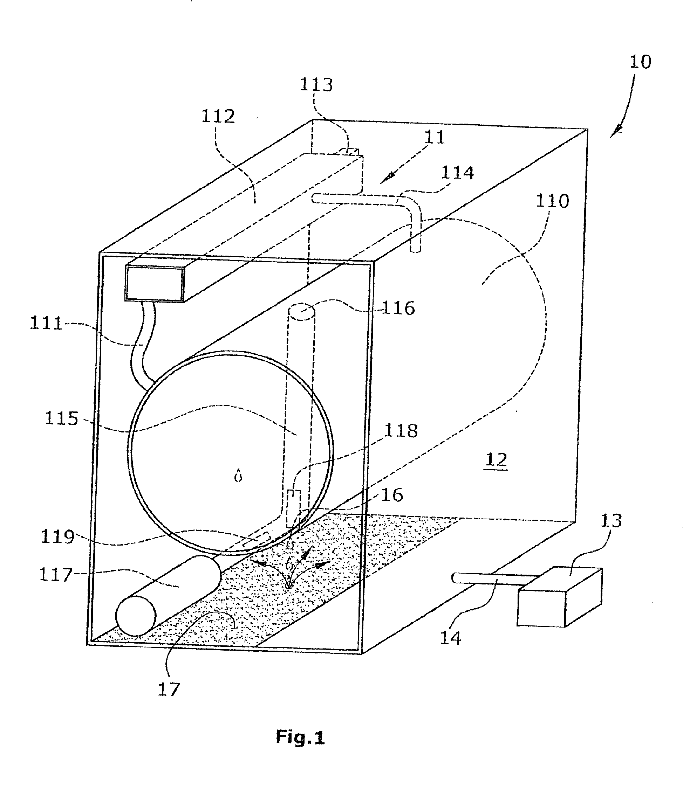

Figur 1 zeigt ein Gehäuse 10, das auf Dichtheit zu prüfende Komponenten 11 enthält. Zu diesen Komponenten gehören beispielsweise ein Laugenbehälter 110, der über ein Einspülrohr 111 mit einem Einspülkasten 112 verbunden ist, der seinerseits mit einem Wasserzulauf 113 verbunden ist. Ferner gehört zu den Komponenten ein Laugenbehälter-Entlüftungsrohr 114, das den Laugenbehälter 110 mit dem Einspülkasten 112 verbindet, und ein Wasserablaufrohr 115, das am oberen Ende einen Wasserablauf 116 aufweist und am unteren Ende mit einer Laugenpumpe 117 verbunden ist. Am Laugenbehälter 110 befindet sich ein Geber 118 für die Füllstandskontrolle und eine Heizkörperdichtung 119, deren Dichtigkeit ebenfalls zu überprüfen ist. Sämtliche Teile 110 bis 119 bilden Komponenten 11, die der Dichtheitsprüfung zu unterziehen sind. Diese Komponenten sind in dem Innenraum 12 des Gehäuses 10 enthalten, der eine Atmosphäre entsprechend der Umgebungsluft enthält. Das Gehäuse 10 umschließt den Innenraum 12 von allen Seiten, wobei eine absolute Gasabdichtung des Innenraums allerdings nicht erforderlich ist. Wichtig ist, dass der Innenraum ein Gasvolumen enthält, das gegenüber der Umgebung des Gehäuses 10 abgegrenzt ist, so dass ein in dem Innenraum 12 befindlicher Indikatorstoff erkannt werden kann.

Zur Erkennung des Indikators dient ein Sensor 13, der über eine Leitung 14 mit dem Innenraum 12 verbunden ist. Der Sensor 13 enthält eine (nicht dargestellte) Saugpumpe, die Gas aus dem Gehäuse 10 absaugt und in die Umgebungsatmosphäre entlässt. Der Sensor ist beispielsweise vom Typ HLD5000 der Firma INFICON GmbH. Hierbei handelt es sich um eine Infrarot-Küvette.

Die Dichtheitsprüfung soll ergeben, ob kleine Wassermengen in Form von Tropfen aus den Komponenten 11 austreten. Eine Messung der Luftfeuchte im Gehäuse 10 wäre nicht genügend empfindlich oder würde zu lange Zeit in Anspruch nehmen. Erfindungsgemäß wird dem Wasser ein Indikator zugeführt, wie Alkohol oder ähnliches. Tropfen 15, die durch ein Wasserleck 16 der Komponente 11 herabtropfen, fallen auf den Boden 17 und zerplatzen dort. Ein 0,1 ml großer Tropfen einer 10%-igen Ethanol-Wasser-Mischung in einem Volumen von Waschmaschinengröße kann innerhalb von drei Minuten mit dem Gerät HLD5000 detektiert werden. Vorteilhaft ist eine Konvektion der Atmosphäre in dem Innenraum 12 durch ein Gebläse oder durch einen Antrieb der (nicht dargestellten) Waschmaschinentrommel.

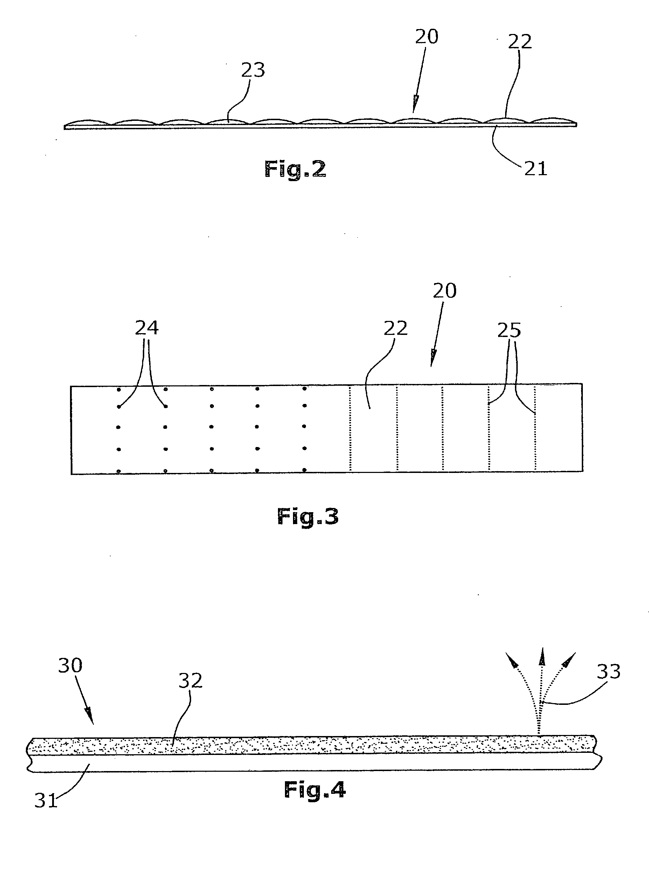

Die Figuren 2 und 3 zeigen eine Vorrichtung zur Durchführung der zweiten Verfahrensvariante. Diese Vorrichtung besteht aus einem Behältnis 20, aus einer Trägerfolie 21 und einer darüber angeordneten, aus einer weiteren Folie bestehenden Wand 22, die bei Kontakt mit Wasser durchlässig wird. Zwischen der Trägerfolie 21 und der Wand 22 befinden sich Hohlräume 23, die mit einem Indikator gefüllt sind. Die Wand 22 ist mit der Trägerfolie 21 entweder an isolierten Punktschweißstellen 24 verbunden oder durch linienförmige Schweißnähte. Im Falle von Punktschweißstellen entsteht ein einheitlicher Zwischenraum und im Falle von linienförmigen Schweißnähten entstehen voneinander getrennte Folientaschen.

Als Material der Wand 22 eignen sich Polyvinylalkohol-Folien (PVOH, auch: PVAL). Solche Folien sind wasserlöslich. Sie sind unter den Markennamen SOLUBLON oder SOKUFOL im Handel erhältlich. PVOH-Folien sind gasdicht gegen viele Gase und mechanisch relativ robust. Sie sind nicht hygroskopisch sondern setzen sich mit der Umgebungsfeuchte ins Gleichgewicht, d. h. sie nehmen Feuchte auf und geben sie auch wieder ab. Mit handelsüblichen Folienschweißgeräten sind sie gut verschweißbar.

Als Indikator im Innern des Behältnisses 20 können verschiedene Gase, insbesondere Edelgase, benutzt werden, aber auch CO₂.

Das als Folientasche ausgebildete flexible Behältnis 20 bildet einen wasserlöslichen Gasspeicher, der auf dem Boden des Gehäuses ausgebreitet wird. Sobald ein Tropfen auf die Wand 22 trifft, wird diese für den Indikator durchlässig, so dass der Indikator in die Atmosphäre des Innenraums des Gehäuses entweicht. Durch den Sensor wird das Vorhandensein des Indikators in dem Innenraum festgestellt.

Figur 4 zeigt eine Vorrichtung 30 zur Durchführung der dritten Verfahrensvariante. Diese Vorrichtung weist ein Substrat 31 aus einer Trägerfolie auf. Das Substrat 31 trägt eine Beschichtung 32 mit einem Generatorstoff, der bei Kontakt mit Wasser einen gasförmigen Indikator 33 freisetzt. Die flächenartige Vorrichtung 30 wird auf den Boden des Gehäuses gelegt. Wenn ein Tropfen auf die Vorrichtung 30 fällt, erzeugt der Generatorstoff 32 den Indikator 33, der von dem an das Gehäuse angeschlossenen Sensor erkannt wird.

Die Erzeugung des Indikatorgases erfolgt durch chemische Reaktion. Beispielsweise besteht der Generatorstoff aus Natronweinsäurepulver 2 NaHCO₃,+C₄H₆O₆. Bei Zugabe von Wasser ergibt sich folgende Reaktion:

2 NaHCO₃ + C₄H₆O₆ → C₄H₄O₆Na₂ + 2 H₂O + 2 CO₂

Dabei entsteht das Indikatorgas CO₂, das mit geeigneten Sensoren detektierbar ist.

Möglich wäre auch der Einsatz von Kaliumhydrogencarbonat, Natriumcarbonat, Kaliumcarbonat oder Calciumcarbonat anstelle von Natriumhydrogencarbonat. Anstelle der Weinsäure können auch andere Säuren oder säurehaltige Substanzen benutzt werden.

## Patentansprüche

1. Verfahren zur Dichtheitsprüfung von wasserführenden Komponenten (11) in einem Gehäuse (10),
**dadurch gekennzeichnet,**
**dass** die Komponenten (11) mit einer Kombination aus Wasser und einem Indikator gefüllt werden, wobei im Falle des Austretens von Tropfen der darin enthaltene Indikator in die von dem Gehäuse (10) umschlossene Atmosphäre entweicht und durch einen auf den Indikator ansprechenden Sensor (13) erkannt wird.

2. Verfahren zur Dichtheitsprüfung von wasserführenden Komponenten (11) in einem Gehäuse (10),
**dadurch gekennzeichnet,**
**dass** ein Indikator in ein Behältnis (20) eingegeben wird, das mindestens eine bei Kontakt mit Wasser für den Indikator durchlässig werdende Wand (22) aufweist, dass das Behältnis (20) in dem Gehäuse (10) unterhalb der zu prüfenden Komponenten (11) positioniert wird und dass das Austreten des Indikators aus dem Behältnis durch einen auf den Indikator ansprechenden Sensor (13) erkannt wird.

3. Verfahren zur Dichtheitsprüfung von wasserführenden Komponenten (11) in einem Gehäuse (10),
**dadurch gekennzeichnet,**
**dass** ein Generatorstoff (32), der bei Kontakt mit Wasser einen gas- oder dampfförmigen Indikator erzeugt, in dem Gehäuse (10) unterhalb der zu prüfenden Komponenten (11) positioniert wird und dass das Auftreten des Indikators durch einen auf den Indikator ansprechenden Sensor (13) erkannt wird.

4. Verfahren nach Anspruch 1, **dadurch gekennzeichnet, dass** als Indikator ein in dem Wasser in gelöster Form enthaltenes Gas verwendet wird.

5. Verfahren nach Anspruch 1 oder 2, **dadurch gekennzeichnet, dass** als Indikator Alkohol verwendet wird.

6. Verfahren nach Anspruch 1 oder 2, **dadurch gekennzeichnet, dass** als Indikator ein Edelgas verwendet wird, insbesondere Helium.

7. Verfahren nach Anspruch 1 oder 2, **dadurch gekennzeichnet, dass** als Indikator CO₂ verwendet wird.

8. Verfahren nach einem der Ansprüche 2 bis 5, **dadurch gekennzeichnet, dass** das Behältnis aus einem Träger mit einer Beschichtung aus Mikrokapseln besteht, die durch den Kontakt mit Wasser ein Entweichen der in den Kapseln eingeschlossenen Substanz bereitstellen.

9. Verfahren nach Anspruch 3, **dadurch gekennzeichnet, dass** der Generatorstoff (32) auf einem Substrat enthalten ist.

10. Verfahren nach Anspruch 3, **dadurch gekennzeichnet, dass** der Generatorstoff in einem Behältnis enthalten ist, das mindestens eine bei Kontakt mit Wasser für den Generatorstoff durchlässig werdende Wand aufweist.

11. Verfahren nach Anspruch 3, dass als Generatorstoff (32) eine Mischung aus Natron und Säure verwendet wird, die bei Kontakt mit Wasser CO₂ als Indikator erzeugt.

12. Verfahren nach einem der vorhergehenden Ansprüche, **dadurch gekennzeichnet, dass** als Sensor ein eine IR-Strecke enthaltender Gassensor verwendet wird, in den die Atmosphäre im Innenraum des Gehäuses (10) eingesaugt wird.

13. Verfahren nach einem der Ansprüche 2 - 12, **gekennzeichnet durch** seine Verwendung zur Prüfung von Haushaltsmaschinen, wie Waschmaschinen oder Geschirrspülmaschinen.

14. Behältnis (30), umfassend einen Träger (21), mit einer auf dem Träger (21) aufgebrachten Beschichtung, die als Indikator bei Kontakt bzw. beim Auftreffen von Wasser auf das Behältnis (20,30) ausgebildet ist, zur Durchführung des Verfahrens nach einem der Ansprüche 2 bis 13.

15. Behältnis nach Anspruch 14, **dadurch gekennzeichnet, dass** die Beschichtung aus Mikrokapseln besteht, die durch den Kontakt mit Wasser ein Entweichen der in den Kapseln eingeschlossenen Substanz bereitstellen.

16. Behältnis nach Anspruch 14, **dadurch gekennzeichnet, dass** der Träger (21) aus einem flexiblen Flachmaterial wie Folie oder Papier besteht.

## Claims

1. A method of testing the tightness of water conducting components (11) in a housing (10),
**characterized in that**
the components (11) are filled with a combination of water and an indicator, wherein in the event of a leakage of drops the indicator contained therein escapes into the atmosphere enclosed by the housing (10) and is detected by a sensor (13) sensitive to the indicator.

2. A method of testing the tightness of water conducting components (11) in a housing (10),
**characterized in that**
an indicator is introduced into a container (20) comprising at least one wall (22) which upon contact with water becomes permeable to the indicator, the container (20) is positioned in the housing (10) below the components (11) under test, and the escaping of the indicator from the container is detected by a sensor (13) sensitive to the indicator.

3. A method of testing the tightness of water conducting components (11) in a housing (10),
**characterized in that**
a generator substance (32), which upon contact with water produces a gaseous or vaporous indicator, is positioned in the housing (10) below the components (11) under test, and the occurrence of the indicator is detected by a sensor (13) sensitive to the indicator.

4. The method of claim 1, **characterized in that** the indicator used is a gas dissolved in the water.

5. The method of claim 1 or 2, **characterized in that** the indicator used is alcohol.

6. The method of claim 1 or 2, **characterized in that** the indicator used is an inert gas, in particular helium.

7. The method of claim 1 or 2, **characterized in that** the indicator used is CO₂.

8. The method of one of claims 2 to 5, **characterized in that** the container is formed by a carrier with a coating of microcapsules which allow the substance enclosed in the capsules to escape upon contact with water.

9. The method of claim 3, **characterized in that** the generator substance (32) is provided on a substrate.

10. The method of claim 3, **characterized in that** the generator substance is contained in a container that comprises at least one wall that becomes permeable to the generator substance upon contact with water.

11. The method of claim 3, **characterized in that** the generator substance (32) used is a mixture of sodium and acid, which produces CO₂ as the indicator upon contact with water.

12. The method of one of the preceding claims, **characterized in that** the sensor used is a gas sensor with an IR section, into which sensor the atmosphere in the interior of the housing (10) is drawn.

13. The method of one of claims 2 to 12, **characterized by** its use in testing household appliances, such as washing machines or dish washing machines.

14. A container (30) comprising a carrier (21) with a coating applied on the carrier (21), the coating being an indicator activated upon contact with water or when water falls on the container (20, 30), for carrying out the method of one of claims 2 to 13.

15. The container of claim 14, **characterized in that** the coating consists of microcapsules which allow the substance enclosed in the capsules to escape upon contact with water.

16. The container of claim 14, **characterized in that** the carrier (21) is made from a flat material such as film or paper.

## Revendications

1. Procédé pour contrôler l'étanchéité d'éléments véhiculant de l'eau (11) logés dans une enveloppe (10), **caractérisé en ce que** les éléments (11) sont remplis d'une combinaison d'eau et d'un indicateur, et **en ce qu'**en cas de fuite de gouttes, l'indicateur qui y est contenu est libéré dans l'atmosphère enfermée par l'enveloppe (10) et est détecté par un capteur (13) qui réagit à l'indicateur.

2. Procédé pour contrôler l'étanchéité d'éléments véhiculant de l'eau (11) logés dans une enveloppe (10), **caractérisé en ce qu'**un indicateur est introduit dans un contenant (20) qui comporte au moins une paroi (22) qui, au contact de l'eau, devient perméable à l'indicateur, **en ce que** le contenant (20) est positionné dans l'enveloppe (10) au-dessous des éléments à contrôler (11) et **en ce que** toute fuite d'indicateur du contenant est détectée par un capteur (13) qui réagit à l'indicateur.

3. Procédé pour contrôler l'étanchéité d'éléments véhiculant de l'eau (11) logés dans une enveloppe (10), **caractérisé en ce qu'**une substance génératrice (32) qui, au contact de l'eau, produit un indicateur gazeux ou à l'état de vapeur, est disposée dans l'enveloppe (10) au-dessous des éléments (11) à contrôler, et **en ce que** toute fuite d'indicateur est détectée par un capteur (13) qui réagit à l'indicateur.

4. Procédé selon la revendication 1, **caractérisé en ce qu'**on utilise comme indicateur un gaz qui est contenu dans l'eau sous forme dissoute.

5. Procédé selon la revendication 1 ou 2, **caractérisé en ce qu'**on utilise comme indicateur un alcool.

6. Procédé selon la revendication 1 ou 2, **caractérisé en ce qu'**on utilise comme indicateur un gaz inerte, en particulier de l'hélium.

7. Procédé selon la revendication 1 ou 2, **caractérisé en ce qu'**on utilise comme indicateur du CO₂.

8. Procédé selon l'une des revendications 2 à 5, **caractérisé en ce que** le contenant est composé d'un support muni d'un revêtement de microcapsules qui, au contact de l'eau, provoquent le dégagement de la substance incluse dans les capsules.

9. Procédé selon la revendication 3, caractérisé n ce que la substance génératrice (32) est retenue sur un substrat.

10. Procédé selon la revendication 3, **caractérisé en ce que** la substance génératrice est contenue dans un contenant présentant au moins une paroi qui, au contact de l'eau, devient perméable à la substance génératrice.

11. Procédé selon la revendication 3, **caractérisé en ce qu'**on utilise comme substance génératrice (32) un mélange de soude et d'acide qui, au contact de l'eau, produit du CO₂ en qualité d'indicateur.

12. Procédé selon l'une des revendications précédentes, **caractérisé en ce qu'**on utilise comme capteur un capteur de gaz comportant une plage IR et dans lequel l'atmosphère contenue dans le volume intérieur de l'enveloppe (10) est introduite par aspiration.

13. Procédé selon l'une des revendications 2 à 12, **caractérisé par** son utilisation pour le contrôle d'appareils électroménagers tels que des lave-linge ou des lave-vaisselle.

14. Contenant (30), comprenant un support (21) et comportant un revêtement déposé sur le support (21) et qui forme un indicateur au contact de l'eau ou lors d'une fuite d'eau sur le contenant (20, 30), pour la mise en oeuvre du procédé selon l'une des revendications 2 à 13.

15. Contenant selon la revendication 14, **caractérisé en ce que** le revêtement est composé de microcapsules qui, au contact de l'eau, provoquent le dégagement de la substance incluse dans les capsules.

16. Contenant selon la revendication 14, **caractérisé en ce que** le support (21) est composé d'une matière plate flexible, telle qu'un film ou du papier.
